# NEUE EUROPÄISCHE PATENTSCHRIFT

(11) **EP 1 276 368 B2**
(45) Veröffentlichungstag und Bekanntmachung des Hinweises auf die Entscheidung über den Einspruch: **18.01.2012**
(45) Hinweis auf die Patenterteilung: 08.03.2006
(21) Anmeldenummer: 01933857.3
(22) Anmeldetag: 19.04.2001
(51) Int. Cl.: A01J 5/08

(54) **MELKBECHER FÜR MELKMASCHINEN**
MILKING CUP FOR MILKING MACHINES
GOBELETS TRAYEURS POUR MACHINES A TRAIRE

(30) Priorität: 28.04.2000 DE 10021080
(43) Veröffentlichungstag der Anmeldung: 22.01.2003
(73) Patentinhaber: Maier, Jakob, Jun., 86842 Türkheim (DE); Hatzack, Wilfred, 86842 Turkheim (DE)
(72) Erfinder: Maier, Jakob, Jun., 86842 Türkheim (DE); Hatzack, Wilfred, 86842 Turkheim (DE)
(74) Vertreter: Grünecker, Kinkeldey, Stockmair & Schwanhäusser
(86) Internationale Anmeldenummer: PCT/EP2001/004475
(87) Internationale Veröffentlichungsnummer: WO 2001/084914

(56) Entgegenhaltungen:
- EP-A- 0 430 526
- DE-A- 1 632 935
- DE-A- 2 046 276
- DE-A- 2 523 465
- DE-B- 1 299 165

## Beschreibung

Die vorliegende Erfindung betrifft einen Melkbecher mit einer Becherhülse, einem in die Becherhülse eingesetzten Zitzengummi mit einem Kopfstück und einem mit einer Milchabführleitung verbindbaren Saugstutzen, und mit einem am Melkbecher vorgesehenen, über eine erste Leitung mit dem Innenraum des Saugstutzens verbundenen Lufteinlassventil, das in Abhängigkeit einer Entlastungsphase, während der in einem Zwischenraum zwischen der Becherhülse und dem Saugstutzen ein im Bezug zum in der Milchabführleitung anstehenden Melkvakuum ein das Einfalten des Saugstutzens bewirkender höherer Druck erzeugt wird, Atmosphärenluft in den Saugstutzen eindringen lässt.

In modernen Agrarbetrieben werden heutzutage fast ausschließlich automatische Melkanlagen verwendet, denen die Aufgabe zufällt, in effizienter Weise die Milch von Hochleistungskühen abzumelken und dabei gleichzeitig einen möglichst schonenden Umgang mit dem Euter des Tieres zu gewährleisten, um einen gleichmäßig hohen Milchertrag sicherzustellen. Ferner muss eine moderne Melkanlage einfach zu handhaben und zu reinigen sein. Eine Melkanlage, die diesen Anforderungen bereits relativ nahe kommt, ist in der DE 25 23 465 beschrieben. Diese Schrift offenbart einen Melkbecher für eine automatische Melkanlage der eingangs genannten Art, wobei das Ende der ersten Leitung ein Stück in den Saugstutzen oder ein zwischen Saugstutzen und Milchabführleitung angeordnetes Rohrverbindungsstück hinein vorsteht. Dadurch wird die Benetzung des Lufteinlassventils mit Milch beim Umdrehen des Melkbechers reduziert.

Ferner wird in der DE 12 99 165 ein Melkbecher beschrieben, wobei im Kopfbereich des Zitzengummis ein Ventilelement vorgesehen ist, so dass sich während der Entlastungsphase das Innere des Kopfbereichs des Zitzengummis mit Atmosphärenluft beaufschlagen lässt.

Obwohl der Melkbecher entsprechend der zuerst genannten Schrift eine spürbare Verbesserung hinsichtlich der Benetzung des Lufteinlassventils mit Milch sowie hinsichtlich des Abfließens der Milch zum Sammelstück bei Beginn der Entlastungsphase bringt und der Melkbecher entsprechend der zuletzt genannten Schrift Vorteile hinsichtlich der Eutergesundheit des Tieres bewirkt, besteht dennoch die Aufgabe, einen verbesserten Melkbecher mit einfachem Aufbau, guter Reinigungsfähigkeit und das Wohlbefinden des Tieres beim Melken fördernde Eigenschaften bereitzustellen.

Diese Aufgabe wird erfindungsgemäß dadurch gelöst, dass beim eingangs beschriebenen Melkbecher im Kopfstück des Zitzengummis eine Öffnung zum Innenraum des Zitzengummis vorgesehen ist, wobei die Öffnung in Abhängigkeit von der Entlastungsphase steuerbar mit Atmosphärenluft beaufschlagbar ist und eine zweite Leitung in Strömungsverbindung mit der Öffnung und dem Lufteinlaßventil vorgesehen ist, um die Öffnung mit Atmosphären Luft zu beaufschlagen, und die Öffnung zeitlich verzögert zum Beginn der Entlastungsphase steuerbar mit Atmosphärenluft beaufschlagbar ist.

Durch den erfindungsgemäßen Melkbecher ist es möglich, sowohl in den Bereich des Saugstutzens unterhalb der Zitze während der Entlastungsphase Atmosphärenluft einzuführen, als auch in dem Bereich der Zitze, der vom Kopfstück des Zitzengummis umgeben ist (dieser Zitzenbereich wird auch als Zitzengrund bezeichnet) mit Atmosphärenluft zu beaufschlagen. Da während der Entlastungsphase das Zitzengewebe massiert werden muss, um einen durch das Melkvakuum hervorgerufenen Blutstau in der Zitze periodisch abzubauen, ermöglicht es der erfindungsgemäße Melkbecher, die durch das Einfalten des Zitzengummis entstehende Massagewirkung zu verstärken. Dies wird dadurch erreicht, dass über die zweite Leitung und die im Kopfstück angeordnete Öffnung durch steuerbares Beaufschlagen mit Atmosphärenluft das Vakuum am Zitzengrund abgeschwächt wird. Folglich findet eine weniger starke Einschnürung dieses Zitzenbereichs statt, und damit wird die Blutzirkulation verbessert. Ferner wird durch das Vermindern des Vakuums am Zitzengrund ein zu starkes, für das Tier unangenehmes Festsitzen des Melkbechers vermieden. Je nach Stärke der Verminderung des Vakuums am Zitzengrund kann ein leichtes Abrutschen des Melkbechers erzielt werden, während bei erneutem Anlegen des gesamten Melkvakuums ein Hochrutschen des Bechers auftritt. Durch diesen zusätzlichen Massageeffekt kann ein Leerpressen der Zitze bei Beginn der Entlastungsphase erreicht werden. Durch den erfindungsgemäßen Aufbau des Melkbechers treten die zuvor genannten Vorteile gleichzeitig in Kombination mit einer verbesserten Ableitung des Milchpfropfens, der sich durch Abreißen des Milchstroms durch Einfalten des Zitzengummis bei Beginn der Entlastungsphase ausbildet, auf. Beim Melkvorgang liegt zunächst während der Saugphase unterhalb der Zitze das über die Milchabführleitung übertragene Melkvakuum an, das zum Ansaugen der abzumelkenden Milch aus der Zitze dient. Ferner wird mittels eines Pulsators im Zwischenraum zwischen der Becherhülse und dem Ansaugstutzen ebenfalls ein Vakuum erzeugt, so dass der Saugstutzen des Zitzengummis aufgrund der fehlenden bzw. kleinen Druckdifferenz zwischen dem Innenraum des Saugstutzens, also dem Bereich unterhalb der Zitze, und dem Zwischenraum in seiner natürlichen Form bleibt. Die aus der Zitze gesaugte Milch fließt aufgrund des Vakuums und der Schwerkraft in die Milchabführleitung. Beim Umschalten in die Saugphase beaufschlagt der Pulsator den Zwischenraum mit beispielsweise Atmosphärendruck, so dass aufgrund der Druckdifferenz der Saugstutzen sich entgegen der Eigenelastizität an die Zitze anpresst und den Milchfluss aus der Zitze unterbricht. Ferner wird der Bereich unmittelbar unterhalb der Zitze durch die Abschnürung des elastischen Saugstutzens vom Bereich des Saugstutzens, der weiterhin mit der Milchabführleitung in Strömungsverbindung steht, abgetrennt. Durch dieses Abschnüren bzw. Kollabieren des Zitzengummis verkleinert sich also der Raum unterhalb der Zitze, wobei aber die sich im gesamten Milchleitungssystem befindliche Milch dieser Pumpwirkung aufgrund der Trägheit nicht schnell genug durch ein beschleunigtes Abfließen folgen kann. Es tritt somit ein kurzer Unterdruckabfall beim Kollabieren unter der Zitze auf. In der weiteren Entwicklung der Entlastungsphase entsteht nach dem vollständigen Kollabieren des Zitzengummis unterhalb des Abschürbereichs durch die abfließende Milchsäule ein verstärktes Vakuum. Dies führt bei der sich anschließenden Saugphase, wenn also der Zitzengummi wieder geöffnet ist, zu einer Rückbeschleunigung der sich noch in der Milchabführleitung befindlichen Milchsäule. Durch das steuerbare Einlassen von Atmosphärenluft in Abhängigkeit von der Entlastungsphase wird damit das Rückbeschleunigen der Milch verhindert.

Dieser Effekt wird erfindungsgemäß durch die am Kopfstück vorgesehene Öffnung zur steuerbaren Beaufschlagung mit Atmosphärenluft verstärkt, da durch das verminderte Vakuum am Zitzengrund auch eine geringfügige Reduzierung des Vakuums unmittelbar unter der Zitze hervorgerufen wird, wodurch beim Einfalten des Zitzengummis bereits zu Beginn der Entlastungsphase die Ausbildung eines zusätzlichen Unterdrucks unterhalb der Zitze während des Abschnürens des Zitzengummis verzögert wird. Ein weiterer Vorteil liegt darin, dass durch Zuführen von Atmosphärenluft sich definierte Druckverhältnisse unabhängig von der Zitzengröße am Euterboden einstellen lassen.

Da eine zweite Leitung in Strömungsverbindung mit der Öffnung und dem Lufteinlassventil vorgesehen ist, um die Öffnung mit Atmosphärenluft zu beaufschlagen, findet das Beaufschlagen mit Atmosphärenluft des oberen Zitzenbereichs in gleicher Weise, vorzugsweise während der Entlastungsphase, statt, in der das Lufteinlassventil ebenfalls den Bereich unterhalb des eingefalteten Zitzengummis mit Atmosphärenluft beaufschlagt. Die Funktion des erfindungsgemäßen Melkbechers ist somit durch ein einzelnes Ventil gewährleistet, wodurch die Handhabung und vor allem die Reinigung des Melkbechers unproblematisch bleibt.

In einer bevorzugten Ausführungsform weist die erste oder die zweite Leitung oder beide eine Vorrichtung zum Begrenzen der Durchflussmenge aufweisen.

Durch diese Vorrichtung, die beispielsweise als Stellschraube zur Verengung der Leitung ausgeführt sein kann, ist es möglich, die am Zitzengrund zuzuführende Menge der Atmosphärenluft einzustellen und somit ein gewünschtes Betriebsverhalten zu erreichen. Dadurch lässt sich beispielsweise die Stärke der Massagewirkung einstellen.
Durch das dosierte Begrenzen bzw. Einstellen der bei der Entlastungsphase zugeführten Atmosphärenluft überhalb des sich nach dem Einfalten des Zitzengummis bildenden Milchpfropfens lässt sich zusätzlich ein optimaler Milchabfluss erreichen, so dass insgesamt eine deutliche Verbesserung, auch langfristig, des Milchertrags auftritt.

Erfindungsgemäß ist die Öffnung zeitlich verzögert zum Beginn der Entlastungsphase steuerbar mit Atmosphärenluft beaufschlagbar.

Durch diese Maßnahme kann die Reduzierung des Vakuums am Zitzengrund zeitlich verzögert zum Einfalten des Zitzengummis ausgeführt werden, wodurch sich der vorteilhafte Effekt ergibt, dass durch das sich Anlegen des einfaltenden Zitzengummis an die Zitze zunächst noch die Milch im Milchkanal nach unten herausgepresst wird und anschließend durch das sich nun am Zitzengrund reduzierende Vakuum eine den in der Zitze vorherrschenden Blutstau auflösende Massagewirkung nach oben eintritt.

Weitere Vorteile ergeben sich aus den Unteransprüchen und der anschließenden detaillierten Beschreibung.

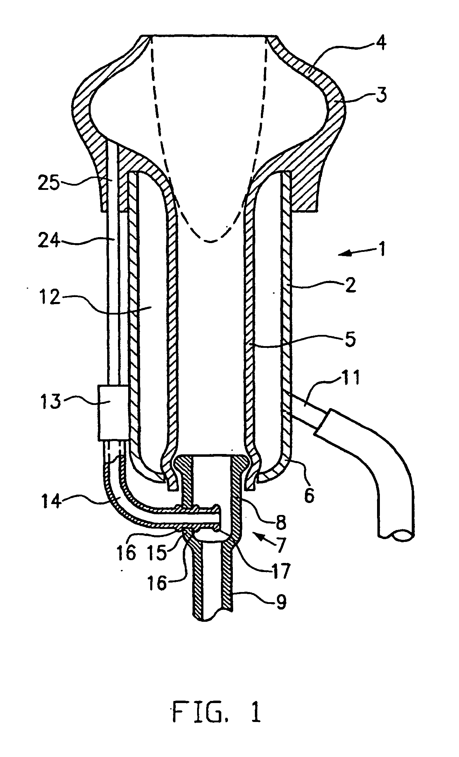

Im Folgenden soll die Erfindung näher anhand von einer in der Zeichnung dargestellten bevorzugten Ausführungsform erläutert werden.

In der Figur weist ein Melkbecher 1 eine Becherhülse 2 auf, in die ein Zitzengummi 3 eingesetzt ist. Der Zitzengummi 3 weist ein Kopfstück 4 auf, mit dem er an der Becherhülse 2 gehalten wird, sowie einen Saugstutzen 5, der vorzugsweise aus einem Stück mit dem Kopfstück 4 hergestellt ist, in die Becherhülse 2 hineinragt und aus einer Öffnung 6 der Becherhülse 2 vorsteht. Der Saugstutzen 5 ist mit Hilfe eines Schauglases 7 gegen die Innenwand der Becherhülse 2 abgedichtet. Das Schauglas besteht aus einem ersten Rohrteil 8 mit einem verhältnismäßig großen Innenquerschnitt, wobei dieser verbreiterte Rohrteil 8 in einen zweiten Rohrteil 9 mit verringertem Querschnitt übergeht. Dieser zweite Rohrteil 9 des Schauglases 7 steht mit der Milchabführleitung, in der ein kontinuierliches Vakuum anliegt, in Verbindung. Die Milchabführleitung ist in der Figur nicht dargestellt.

An der Becherhülse 2 ist ein Rohrstutzen 11 ausgebildet, der den zwischen der Innenwand der Becherhülse 2 und der Außenseite des Saugstutzens 5 liegenden Ringraum 12 mit einem, in der Figur nicht dargestellten Pulsator verbindet, über den der Ringraum 12 periodisch auf einen Unterdruck und sodann wieder auf Atmosphärendruck gebracht wird. Mit dem Ringraum 12 steht gleichfalls ein an der Becherhülse 2 befestigtes Lufteinlassventil 13 in Verbindung. Das Lufteinlassventil 13 steht über eine erste Leitung 14 mit dem verbreiterten Rohrteil 8 des Schauglases 7 in Strömungsverbindung. Ferner führt vom Lufteinlassventil 13 eine zweite Leitung 24 zum Kopfstück 4 des Zitzengummis 3. Über eine Öffnung 25 im Kopfstück 4 des Zitzengummis steht das Lufteinlassventil in Strömungsverbindung mit dem Innenraum des Zitzengummis. Das Lufteinlassventil 13 ist nur schematisch dargestellt und ist derart ausgebildet, dass es in Abhängigkeit von dem jeweils in dem Ringraum 12 herrschenden Pulsatordruck eine Verbindung zwischen der Leitung 14 und der Atmosphäre herstellt, wobei in dieser Ausführungsform das Lufteinlassventil 14 so eingestellt ist, dass es während der Entlastungsphase bei einem verhältnismäßig geringen Anstieg des Pulsatordrucks öffnet und zu Beginn der Saugphase, wenn der Pulsatordruck wieder vom Atmosphärendruck auf einen vorbestimmten Unterdruck hin abnimmt, wieder schließt. Da der Saugstutzen 5 und das Rohrteil 8 über die Milchabführleitung dauernd unter Unterdruck stehen, kann bei einer Öffnung des Lufteinlassventils 13 über die Leitung 14 Luft unter Atmosphärendruck in das Rohrteil 8 und somit in den Saugstutzen 5 wie auch in die Milchabführleitung einströmen. Die Leitung 14 ist vorzugsweise lösbar mit dem erweiterten Rohrteil 8 des Schauglases verbunden. Zu diesem Zweck ist in dem Rohrteil 8 eine die seitliche Wandung durchsetzende Öffnung 15 vorgesehen. Zur Halterung der Leitung 14 in dieser Öffnung 15 sind an dem Ende der Leitung 14 Rohrlamellen 16 ausgebildet, die im eingesetzten Zustand der Leitung 14 auf einander gegenüberliegenden Seiten der Wandung des Rohrteils 8 zu liegen kommen und die Leitung 14 fest in dem Rohrteil 8 haltern und auch gegen dieses Rohrteil abdichten. Die Leitung 14 selbst besteht vorzugsweise aus einem flexiblen und durchsichtigen Material, so dass genau beobachtet werden kann, ob sich irgendwelche Rückstände in der Leitung 14 befinden. Vorzugsweise steht die Leitung 14 auch ein gewisses Stück über die Innenwandung des Rohrteils 8 hinaus in das Rohrteil 8 hinein vor. Dabei kann an dem hineinragenden Ende eine Tropfnase 17 ausgebildet sein. Durch dieses in das Rohrteil 8 hinein vorstehende Ende und insbesondere durch die Ausbildung einer Tropfnase an diesem Ende wird verhindert, dass beim Umdrehen des Melkbechers Milch aus dem Rohrteil 9 und der damit verbundenen Milchabführleitung in die Leitung 14 zurückfließt.

Die Funktionsweise des Melkbechers 1 ist etwa wie folgt:

Zu Beginn wird eine zu melkende Zitze über das Kopfstück 4 des Zitzengummis 3 in den Saugstutzen 5 eingeführt. Sodann wird in dem Saugstutzen 5 ein Unterdruck über die Milchabführleitung und das Schauglas 7 erzeugt. Gleichzeitig wird der Pulsator in Betrieb gesetzt. Wird durch den Pulsator in dem Ringraum 12 ein Unterdruck erzeugt, so befindet sich der Melkbecher in der Saugphase, wobei die Leitungen 14 und 24 über das Lufteinlassventil 13 von der Atmosphäre abgeschlossen sind. Der Ansaugstutzen 5 weist dabei wegen des gleichen Unterdrucks an der Innen- und Außenseite seine in der Figur dargestellte natürliche Form auf. In der Saugphase wird die Milch aufgrund des Vakuums durch das Schauglas 7 in die Milchabführleitung gesaugt und durch diese abgeführt.

In der Entlastungsphase wird der Ringraum 12 auf Atmosphärendruck gebracht. Hierbei wird das Lufteinlassventil 13 geöffnet, so dass über die Leitung 14 Atmosphärenluft in das erweiterte Rohrteil 8 des Schauglases 7 einströmen kann, und über die Leitung 24 und die Öffnung 25 Atmosphärenluft im Bereich des Zitzengrunds in das Innere des Zitzengummis einströmen kann. Wie aus der Zeichnung zu entnehmen ist, mündet die Öffnung 25 in das Innere des Zitzengummis in einem Bereich, der über dem Dichtbereich mit der Zitze liegt. Somit wird während der Entlastungsphase der Unterdruck über dem abdichtenden Bereich mit der Zitze abhängig von der Menge der eingelassenen Atmosphärenluft vermindert. Dies führt ebenfalls zu einem leicht reduzierten Vakuum unterhalb des Dichtbereichs, da die Abdichtung zwischen dem Zitzengummi und der Zitze nicht vollständig ist. Ferner wird während der Entlastungsphase durch den im Ringraum 12 vorherrschenden Atmosphärendruck der Saugstutzen 5 des Zitzengummis entgegen seiner Eigenelastizität eingefaltet, wobei sich der obere Bereich des Saugstutzens an die Zitze anschmiegt und unterhalb der Zitze ein Einschnürungsbereich entsteht, der die Zitze vom Bereich über dem Schauglas 7 abtrennt. Somit wird durch das Einschnüren des Zitzengummis der Milchfluss von der Zitze unterbrochen, und es tritt eine massierende Wirkung aufgrund des sich durch den Atmosphärendruck anliegenden Zitzengummis auf. Der unterhalb des Einschnürungsbereichs abfließende Milchpfropfen würde aufgrund seines Abfließens ein noch größeres Vakuum im Bereich des Schauglases 7 erzeugen und somit bei der nachfolgenden Saugphase wieder zur Zitze hin zurückbeschleunigt werden. Dies wird durch das Einführen einer gewissen Menge von Atmosphärenluft über das Lufteinlassventil 13 und die Leitung 14 verhindert, so dass ein zügiges Abfließen des Milchpfropfens gewährleistet ist.

Durch das Zusammenwirken der im Kopfteil des Zitzengummis zugeführten Atmosphärenluft sowie der im Schauglas 7 über die Leitung 14 zugeführten Atmosphärenluft wird somit zum einen ein zuverlässiges Abführen der gemolkenen Milch sowie andererseits eine effiziente Massagewirkung zur Rückführung des gestauten Bluts in der Zitze erreicht.

Ferner ist es auch denkbar, mittels der zweiten Leitung 24 und ein daran angebrachtes Dosierelement, das beispielsweise in Form einer Klemme ausgebildet sein kann, ständig eine gewisse Menge an Atmosphärenluft im Bereich des Zitzengrunds zuzuführen, um eine zu starke Abschnürung der Zitze im oberen Bereich zu vermeiden. Weiterhin ist es vorteilhaft, beide Leitungen 14, 24 mit separat einstellbaren Dosierelementen, wie beispielsweise Klemmen, zu versehen, um gezielt die Menge an einströmender Atmosphärenluft zu steuern.

Erfindungsgemäß ist ein Verzögerungselement im Lufteinlassventil, das die zweite Leitung 24 mit Atmosphärenluft versorgt, vorgesehen, um eine gewisse zeitliche Verzögerung zwischen dem Beginn der Entlastungsphase, also dem Vorhandensein von Atmosphärendruck im Ringraum 12, und der Beaufschlagung des oberen Zitzenbereichs mit Atmosphärenluft zu erreichen. Die zeitliche Verzögerung kann beispielsweise dadurch erreicht werden, dass das die Leitung 24 beaufschlagende Lufteinlassventil erst bei Erreichen eines relativ hohen Drucks im Ringraum 12 die Verbindung zwischen der Atmosphäre und der Leitung 24 herstellt. Dadurch lässt sich erreichen, dass zunächst durch das Einfalten des Ansaugstutzens die Zitze von oben her "ausgepresst" wird, und durch den sich anschließenden Massagedruck des Ansaugstutzens und die verringerte Haftung des Ansaugstutzens durch das reduzierte Vakuum im oberen Bereich der Zitze die Durchblutung gefördert wird.

Ein wesentlicher Vorteil des erfindungsgemäßen Melkbechers besteht auch darin, dass aufgrund der verbesserten Massagewirkung das Gesamtgewicht des Melkbechers reduziert werden kann. Das hohe Gewicht bei einem herkömmlichen Melkbecher war insbesondere erforderlich, um durch die Dynamik beim Melkvorgang durch das hohe Gewicht der pendelnden Melkbecher eine gewisse Stimulierung des Euters zu erzielen. Da die kombinierte Atmosphärenluftzufuhr eine entsprechende Auf- und Abbewegung des Melkbechers bewirkt, kann auf das hohe Eigengewicht des Melkbechers verzichtet werden. Daher lässt sich der Melkbecher teilweise oder vollständig aus einem leichten Material, z.B. Kunststoff, beispielsweise in Spritzgusstechnik, herstellen.

In einer weiteren Ausführungsform ist die zweite Leitung 24 als integrales Bestandteil des Zitzengummis 3 bzw. des Ansaugstutzens 5 ausgebildet, wodurch sich eine einfache und preiswerte Herstellung des erfindungsgemäßen Melkbechers erzielen lässt.

Vorteilhafterweise wird das Lufteinlassventil in der Art aufgebaut, wie dies in der die Patentschrift DD 2 33 063 beschrieben ist, wodurch sich die Benetzung mit Milch während des Betriebes vermeiden und somit die Reinigung und die Sauberhaltung des Melkbechers verbessern lässt.

## Patentansprüche

1. Melkbecher (1) mit einer Becherhülse (2), einem in die Becherhülse (2) eingesetzten Zitzengummi (3) mit einem Kopfstück (4) und einem mit einer Milchabführleitung verbindbaren Saugstutzen (5), und mit einem am Melkbecher (1) vorgesehenen, über eine erste Leitung (14) mit dem Innenraum des Saugstutzens (5) verbundenen Lufteinlassventil (13), das in Abhängigkeit einer Entlastungsphase, während der in einem Zwischenraum (12) zwischen der Becherhülse (2) und dem Saugstutzen (5) ein im Bezug zum in der Milchabführleitung anstehenden Melkvakuum ein das Einfalten des Saugstutzens (5) bewirkender höherer Druck erzeugt wird, Atmosphärenluft in den Saugstutzen (5) eindringen lässt, **dadurch gekennzeichnet, dass** im Kopfstück (4) des Zitzengummis (3) eine Öffnung (25) zum Innenraum des Zitzengummis (3) vorgesehen ist, wobei die Öffnung (25) in Abhängigkeit von der Entlastungsphase steuerbar mit Atmosphärenluft beaufschlagbar ist, und eine zweite Leitung (24) in Strömungsverbindung mit der Öffnung und dem Lufteinlassventil vorgesehen ist, um die Öffnung mit Atmosphärenluft zu beaufschlagen, und die Öffnung zeitlich verzögert zum Beginn der Entlastungsphase steuerbar mit Atmosphärenluft beaufschlagbar ist.

2. Der Melkbecher nach Anspruch 1, **dadurch gekennzeichnet, dass** die erste oder die zweite Leitung oder beide eine Vorrichtung zum Begrenzen der Durchflussmenge aufweisen.

3. Der Melkbecher nach einem der Ansprüche 1 oder 2, **dadurch gekennzeichnet, dass** die erste und die zweite Leitung zeitlich und/oder in Bezug auf das jeweilige Luftvolumen unabhängig voneinander steuerbar sind.

4. Der Melkbecher nach einem der Ansprüche 1-3, **dadurch gekennzeichnet, dass** eine ständige Verbindung zwischen der ersten Leitung und der Öffnung vorgesehen ist, um sicherzustellen, dass bei der Saugphase der vom Kopfstück umschlossene Bereich einer Zitze mit einem zur sicheren Haftung des Melkbechers an der Zitze ausreichenden Vakuum versorgt ist.

## Claims

1. Milking cup (1) comprising a cup sleeve (2), a teat rubber (3) inserted in the cup sleeve (2) with a head piece (4) and an intake socket (5) connectable with a milk discharge conduit, and an air inlet valve (13) provided on the milking cup (1) and connected with the interior space of the intake socket (5) via a first conduit (14), which lets atmospheric air penetrate into the intake socket (5) in dependence of a relief phase, during which a higher pressure is generated relative to the milking vacuum pending in the milk discharge conduit in a clearance (12) between the cup sleeve (2) and the intake socket (5), causing a folding-in of the intake socket (5) **characterized in that** an opening (25) toward the interior space of the teat rubber (3) is provided in the head piece (4) of the teat rubber (3), wherein the opening (25) can controllably be supplied with atmospheric air in dependence of the relief phase, and
a second conduit (24) is provided in flow connection with the opening and the air inlet valve so as to supply the opening with atmospheric air, and **in that** the opening can controllably be supplied with atmospheric air with a time delay at the beginning of the relief phase.

2. Milking cup according to claim 1, **characterized in that** the first or the second conduit, or both, comprise a device for limiting the flow rate.

3. Milking cup according to one of claims 1 or 2 , **characterized in that** the first and the second conduit can be controlled independently of one another in terms of time and/or in view of the respective air volume.

4. Milking cup according to one of claims 1 to 3, **characterized in that** a permanent connection is provided between the first conduit and the opening so as to guarantee that the teat portion enclosed by the head piece during the suction phase is supplied with a vacuum sufficient to safely adhere the milking cup on the teat.

## Revendications

1. Gobelet trayeur (1) comprenant un étui rigide (2), un manchon trayeur (3) qui est placé dans l'étui rigide (2) et qui comporte une partie supérieure (4) et une tubulure d'aspiration (5) apte à être reliée à une conduite d'évacuation de lait, et une soupape d'admission d'air (13) qui est prévue sur le gobelet trayeur (1), qui est reliée par une première conduite (14) à l'intérieur de la tubulure d'aspiration (5) et qui peut laisser entrer l'air atmosphérique dans celle-ci en fonction d'une phase de détente pendant laquelle on produit dans un espace intermédiaire (12) entre l'étui rigide (2) et la tubulure d'aspiration (5) une pression qui est supérieure par rapport au vide de traite présent dans la conduite d'évacuation de lait et qui provoque l'écrasement de la tubulure d'aspiration (5),
**caractérisé en ce qu'**il est prévu dans la partie supérieure (4) du manchon trayeur (3) une ouverture (25) vers l'intérieur de celui-ci, l'ouverture (25) pouvant être contrainte d'une manière contrôlable avec de l'air atmosphérique en fonction de la phase de détente, et qu'il est prévu une seconde conduite (24) qui communique pour l'écoulement avec l'ouverture et la soupape d'admission d'air, pour contraindre ladite ouverture avec de l'air atmosphérique, et que l'ouverture est apte à être contrainte de manière contrôlable avec de l'air atmosphérique avec un certain retard, au début de la phase de détente..

2. Gobelet trayeur selon la revendication 1, **caractérisé en ce que** la première ou la seconde conduite ou les deux ont un dispositif pour limiter le débit.

3. Gobelet trayeur selon l'une des revendications 1 ou 2, **caractérisé en ce que** la première et la seconde conduite peuvent être commandées indépendamment l'une de l'autre dans le temps et/ou par rapport au volume d'air.

4. Gobelet trayeur selon l'une des revendications 1 à 3, **caractérisé en ce qu'**il est prévu une liaison permanente entre la première conduite et l'ouverture, afin de garantir que pendant la phase de succion, la zone d'un trayon entourée par la partie supérieure soit alimentée avec un vide suffisant pour une adhérence sûre du gobelet trayeur au trayon.
